# EUROPEAN PATENT APPLICATION

(11) **EP 4 760 186 A1**
(43) Date of publication of application: **17.06.2026**
(21) Application number: 25848907.9
(22) Date of filing: 29.07.2025
(51) Int. Cl.: F26B 21/00, F26B 3/04, H01M 4/04

(54) **SYSTEM AND METHOD FOR MONITORING ELECTRODE DRYING PROCESS**

(30) Priority: 01.08.2024 KR 20240102273
(71) Applicant: LG Energy Solution, Ltd., Seoul 07335 (KR)
(72) Inventor: YANG, Heekwang, Daejeon 34122 (KR); CHONG, Euecheol, Daejeon 34122 (KR); KIM, Yeonchan, Daejeon 34122 (KR); JANG, Eunbin, Daejeon 34122 (KR); KO, Myungjun, Daejeon 34122 (KR)
(74) Representative: BCKIP Part mbB
(86) International application number: PCT/KR2025/011278
(87) International publication number: WO 2026/029547

(57) **Abstract**

A monitoring system for a plurality of sections within a drying oven performing a drying process for an electrode according to an embodiment of the present disclosure includes: a sensor portion that measures a moisture content and a temperature of a surface of the electrode in each of the plurality of sections whenever the drying process for the electrode is performed to determine a moisture measurement value and a temperature measurement value; and a control portion that determines the number of quality influence sections that affect a quality of the electrode based on the moisture measurement value and the temperature measurement value of each of the plurality of sections, determines whether correction of a condition of the drying oven for a state of the drying oven is necessary based on whether the moisture measurement value is less than or equal to a correction determination reference value and the number of the quality influence sections is greater than or equal to a reference number, and controls progress of a next drying process by adjusting the condition of the drying oven according to a result of determining whether correction for the condition of the drying oven is necessary.

## Description

### [Technical Field]

### Cross-reference to related application(s)

This application claims priority to and the benefit of Korean Patent Application No. 10-2024-0102273 filed with the Korean Intellectual Property Office on August 1, 2024, the entire contents of which are incorporated herein by reference.

The present disclosure relates to an electrode drying process monitoring system and an electrode drying process monitoring method.

### [Background Art]

An electrode manufacturing process used in a secondary battery includes an electrode drying process that uses a drying oven to dry a slurry after coating. While the electrode drying process is being performed, a section in which capillary migration of a binder included in an electrode occurs is generated. The capillary migration of the binder affects a quality of the electrode. For example, if the capillary migration of the binder occurs rapidly for a relatively short time, the binder may be disproportionately distributed so that a main quality of the electrode is degraded (for example, a defect (e.g., a thermal wrinkle or a crack) is generated in an appearance of the electrode or an adhesive force of the electrode is degraded).

Accordingly, it is necessary to monitor the electrode drying process and correct a state of the drying oven due to the monitoring so as to maintain and improve a quality of the electrode. However, conventionally, the drying oven that performs the drying process was divided into a plurality of sections, and the process was performed by measuring a temperature of a surface of the electrode for each section or checking a drying state of the surface of the electrode with a naked eye, but this is not quantitative and is significantly dependent on subjective determination of a person so that there is a problem in which that consistency is not secured.

### [Disclosure]

### [Technical Problem]

A purpose of the present disclosure is to provide a system and a method for monitoring an electrode drying process capable of improving a quality of an electrode by controlling the electrode drying process based on a result of analyzing data obtained in a drying oven of the electrode.

### [Technical Solution]

A monitoring system for a plurality of sections within a drying oven performing a drying process for an electrode according to an embodiment of the present disclosure includes: a sensor portion that measures a moisture content and a temperature of a surface of the electrode in each of the plurality of sections whenever the drying process for the electrode is performed to determine a moisture measurement value and a temperature measurement value; and a control portion that determines the number of quality influence sections that affect a quality of the electrode based on the moisture measurement value and the temperature measurement value of each of the plurality of sections, determines whether correction of a condition of the drying oven for a state of the drying oven is necessary based on whether the moisture measurement value is less than or equal to a correction determination reference value and the number of the quality influence sections is greater than or equal to a reference number, and controls progress of a next drying process by adjusting the condition of the drying oven according to a result of determining whether correction for the condition of the drying oven is necessary.

The sensor portion may include: an electrode surface moisture measurement portion that calculates an average value of the moisture content of the surface of the electrode for each of the plurality of sections in real time to determine the moisture measurement value; and an electrode surface temperature measurement portion that measures the temperature of the surface of the electrode for each of the plurality of sections in real time and determines an average value of the measured temperatures as the temperature measurement value.

The sensor portion may include: an electrode surface moisture measurement portion that measures the moisture content of the surface of the electrode at a specific point in each of the plurality of sections to determine the moisture measurement value; and an electrode surface temperature measurement portion that measures the temperature of the surface of the electrode at a specific point in each of the plurality of sections to determine the temperature measurement value.

The control portion may include a section-by-section characteristic determination portion that determines whether each of the plurality of sections corresponds to one of the quality influence section, a drying completion section, and a general section based on the moisture measurement value and the temperature measurement value of each of the plurality of sections within the drying oven whenever the drying process is performed.

The section-by-section characteristic determination portion may determine whether the section corresponds to the quality influence section based on whether the moisture measurement value and the temperature measurement value for each of the plurality of sections correspond to a first reference range, and may determine whether the section corresponds to the drying completion section based on whether the moisture measurement value and the temperature measurement value for each of the plurality of sections correspond to a second reference range greater than the first reference range.

The section-by-section characteristic determination portion may determine whether the section corresponds to the quality influence section based on whether a change rate of the moisture measurement value for each of the plurality of sections and a change rate of the temperature measurement value for each of the plurality of sections correspond to a section setting reference value.

The control portion may include a correction need determination portion that determines that the correction for the condition of the drying oven is not necessary if the moisture measurement value is less than or equal to the correction determination reference value and the number of the quality influence sections is greater than or equal to the reference number or determines that the correction for the condition of the drying oven is necessary if the moisture measurement value exceeds the correction determination reference value or the number of the quality influence sections is less than the reference number.

If it is determined that the correction for the condition of the drying oven is necessary, the correction need determination portion may determine that correction of an internal temperature of the drying oven is necessary if the number of times of correction of a speed of a hot air received from a storage portion is greater than or equal to a reference number of times or may determine that correction of a speed of a hot air supplied into the drying oven is necessary if the number of times of correction of the speed of the hot air is less than the reference number of times.

The control portion may include a drying oven adjustment portion transmitting a control signal for correcting a speed of a hot air supplied into the drying oven to a circulation fan installed at the drying oven if a result of determining that the correction for the condition of the drying oven is necessary is received or transmitting a control signal for maintaining the condition of the drying oven to the circulation fan and a heating portion installed at the drying oven if a result of determining that the correction for the condition of the drying oven is not necessary is received.

The drying oven adjustment portion may transmit the control signal for correcting the speed of the hot air to the circulation fan and simultaneously the drying oven adjustment portion may count the number of times of correction of a speed of a hot air stored in a storage portion.

The drying oven adjustment portion may transmit the control signal for correcting the speed of the hot air to the circulation fan if a result of determining that correction of a speed of a hot air supplied into the drying oven is necessary is received, and the drying oven adjustment portion may transmit a control signal for correcting a temperature of the hot air or a control signal for correcting a temperature of the heating portion to the circulation fan or the heating portion if a result of determining that correction of an internal temperature of the drying oven is necessary is received.

If the result of determining that the correction for the condition of the drying oven is necessary is received, the drying oven adjustment portion may transmit the control signal for correcting the temperature of the hot air to the circulation fan installed in a section immediately preceding a specific section among the plurality of sections of the drying oven if the moisture measurement value of the specific section exceeds the correction determination reference value.

If the result of determining that the correction for the condition of the drying oven is necessary is received, the drying oven adjustment portion may transmit the control signal for correcting the temperature of the hot air to the circulation fan installed in a section before and after the quality influence section if the number of sections corresponding to the quality influence sections among the plurality of sections of the drying oven is less than the reference number.

If the result of determining that the correction for the condition of the drying oven is necessary is received, the drying oven adjustment portion may transmit the control signal for correcting the temperature of the hot air to the circulation fan installed in a section immediately preceding a specific section among the plurality of sections of the drying oven or may transmit the control signal for correcting the temperature of the heating portion installed in the section immediately preceding the specific section if the moisture measurement value of the specific section exceeds the correction determination reference value.

If the result of determining that the correction for the condition of the drying oven is necessary is received, the drying oven adjustment portion may transmit the control signal for correcting the temperature of the hot air to the circulation fan installed in a section before and after the quality influence section or may transmit the control signal for correcting the temperature of the heating portion installed in the section before and after the quality influence section if the number of sections corresponding to the quality influence sections among the plurality of sections of the drying oven is less than the reference number.

An electrode drying process monitoring method according to an embodiment of the present disclosure includes: obtaining, by a control portion, first drying process data including a first moisture measurement value and a first temperature measurement value for each of a plurality of sections within a drying oven performing a first drying process from a sensor portion and specifying, by the control portion, the number of first quality influence sections that affect a quality of an electrode among the plurality of sections based on the first moisture measurement value and the first temperature measurement value; determining, by the control portion, whether correction of a first drying oven condition for a state of the drying oven performing the first drying process is necessary based on the number of the first quality influence sections and the first moisture measurement value; and performing, by the control portion, a second drying process by adjusting a speed of a hot air inside the drying oven if it is determined that the correction for the first drying oven condition is necessary and performing, by the control portion, the second drying process in a state in which the first drying oven condition is maintained if it is determined that the correction for the first drying oven condition is not necessary.

The determining of whether the correction of the first drying oven condition is necessary may include determining whether the correction of the first drying oven condition is necessary if the number of the first quality influence sections is less than a reference number and the first moisture measurement value exceeds a correction determination reference value.

The performing of the second drying process may include: transmitting a control signal for correcting the speed of the hot air supplied into the drying oven to a circulation fan installed at the drying oven and counting the number of times of correction of the speed of the hot air if it is determined that the correction for the first drying oven condition is necessary; or transmitting a control signal for maintaining the first drying oven condition to the circulation fan and a heating portion if it is determined that the correction for the first drying oven condition is not necessary.

The counting of the number of times of correction of the speed of the hot air may include: correcting a speed of the circulation fan installed in a section immediately preceding a specific section among the plurality of sections of the drying oven if the moisture measurement value of the specific section exceeds a correction determination reference value; and correcting a speed of the circulation fan installed in a section before and after the first quality influence section if the number of sections corresponding to the first quality influence sections among the plurality of sections of the drying oven is less than a reference number.

The electrode drying process monitoring method may further include: obtaining, by the control portion, second drying process data including a second moisture measurement value and a second temperature measurement value for each of the plurality of sections within the drying oven performing the second drying process from the sensor portion and specifying, by the control portion, the number of second quality influence sections among the plurality of sections based on the second moisture measurement value and the second temperature measurement value; determining, by the control portion, whether correction of a second drying oven condition for a state of the drying oven performing the second drying process is necessary based on the number of the second quality influence sections and the second moisture measurement value and determining, by the control portion, a type of the second drying oven condition requiring the correction based on the number of times of correction of a speed of a hot air received from a storage portion; and performing, by the control portion, a third drying process by adjusting the speed of the hot air supplied into the drying oven if it is determined that the correction for the second drying oven condition is necessary and it is determined that the correction of the speed of the hot air supplied into the drying oven among the second drying oven condition is necessary, performing, by the control portion, the third drying process by adjusting a temperature of the hot air supplied into the drying oven or a temperature of a heating portion installed in the drying oven if it is determined that the correction for the second drying oven condition is necessary and it is determined that correction of an internal temperature of the drying oven among the second drying oven condition is necessary, and performing, by the control portion, the third drying process in a state in which the second drying oven condition is maintained if it is determined that the correction for the second drying oven condition is not necessary.

The determining of the type of the second drying oven condition may include: determining that the correction for the second drying oven condition is necessary if the number of the second quality influence sections is less than a reference number and the second moisture measurement value exceeds a correction determination reference value; and determining the type of the second drying oven condition requiring the correction based on whether the number of times of correction of the speed of the hot air is greater than or equal to a reference number of times if it is determined that the correction for the second drying oven condition is necessary.

The determining of the type of the second drying oven condition may include: determining that the correction of the internal temperature of the drying oven is necessary if the number of times of correction of the speed of the hot air is greater than or equal to the reference number of times; or determining that correction of a speed of a hot air supplied into the drying oven is necessary if the number of times of correction of the speed of the hot air is less than the reference number of times.

The performing of the third drying process may include: transmitting a control signal for correcting the speed of the hot air supplied into the drying oven to a circulation fan installed in the drying oven if it is determined that the correction for the second drying oven condition is necessary and it is determined that the correction for the speed of the hot air supplied into the drying oven is necessary; transmitting a control signal for correcting the temperature of the hot air supplied into the drying oven to the circulation fan or transmitting a control signal for correcting the temperature of the heating portion installed in the drying oven to the heating portion if it is determined that the correction for the second drying oven condition is necessary and it is determined that the correction of the internal temperature of the drying oven is necessary; or transmitting a control signal for maintaining the second drying oven condition to the circulation fan and the heating portion if it is determined that the correction for the second drying oven condition is not necessary.

### [Advantageous Effects]

According to an embodiment of the present disclosure, a quality of an electrode may be optimized by controlling an electrode drying process through determination based on a quantitative criterion.

If an environment around a drying oven is changed due to an external factor or the like, a speed and a temperature of a hot air inside the drying oven may be automatically corrected to prevent the quality of the electrode from deteriorating.

An effect that may be obtained from the present disclosure is not limited to the effects described above, and another effect not described will be clearly understood by those of ordinary skill in the art to which the present disclosure pertains from the following description.

### [Description of the Drawings]

FIG. 1 is a view for describing an electrode drying process monitoring system according to an embodiment of the present disclosure.
FIG. 2 is a block diagram of the electrode drying process monitoring system according to an embodiment of the present disclosure.
FIG. 3 is a flowchart of an electrode drying process monitoring method according to an embodiment of the present disclosure.

### [Mode for Invention]

If it is determined that a detailed description of a related known technology may obscure a gist of an embodiment disclosed in the present specification in describing the embodiment disclosed in the present specification, a detailed description thereof will be omitted. The accompanying drawings are only for easy understanding of the embodiment disclosed in the present specification, a technical idea disclosed in the present specification is not limited by the accompanying drawings, and the present disclosure should be understood to include all changes, equivalents, or substitutes included in the spirit and technical scope of the present disclosure.

Terms including ordinal numbers such as "first" and "second" may be used to describe various constituent elements, but the constituent elements are not limited by the terms. The terms may be used for a purpose of distinguishing one constituent element from other constituent elements.

When it is stated that a constituent element is "coupled to" or "connected to" to another constituent element, it should be understood that the constituent element may be directly coupled to or connected to the other constituent element but another constituent element may exist between the constituent element and the other constituent element. In contrast, when it is stated that a constituent element is "directly coupled to" or "directly connected to" another constituent element, it should be understood that a constituent element does not exist between the constituent element and the other constituent element.

In the present application, it should be understood that a term such as "include" or "have" is intended to indicate the presence of a feature, number, step, operation, constituent element, part, or a combination thereof described in the specification and it does not preclude the possibility of the presence or addition of one or more other features, numbers, steps, operations, constituent elements, parts, or combinations thereof.

Hereinafter, the present disclosure will be described in detail with reference to the accompanying drawings.

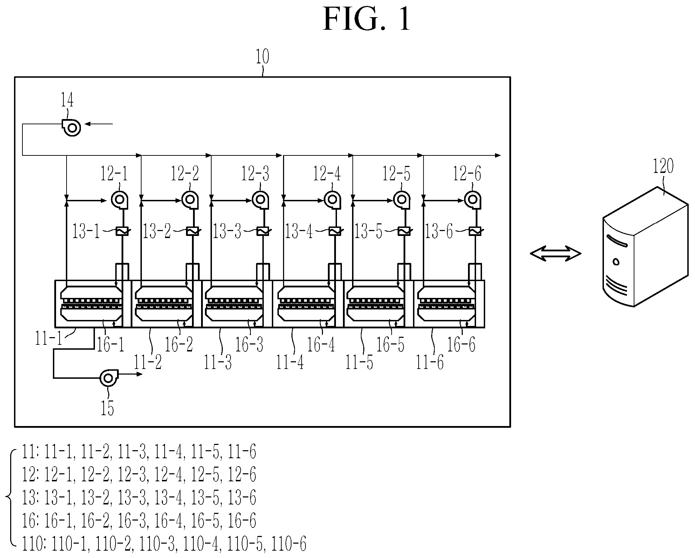

FIG. 1 is a view for describing an electrode drying process monitoring system according to an embodiment of the present disclosure.

Referring to FIG. 1, the system for monitoring the electrode drying process according to the embodiment of the present disclosure may monitor a drying process of an electrode performed in a drying oven 10 to obtain drying process data, and based on a result of analyzing the obtained drying process data, it may correct a condition of the drying oven for a state of the drying oven 10 to maintain and manage a quality of the electrode produced through the drying process.

The drying oven 10 may be a device for drying the electrode introduced therein. The drying oven 10 may include a plurality of sections 11:11-1 to 11-6 communicating with each other. In FIG. 1, the drying oven 10 is illustrated as including six sections, but this is for convenience of description, and the number of the plurality of the sections 11 included in the drying oven 10 is not limited thereto. The number of the plurality of the sections 11 included in the drying oven 10 may be set to various numbers depending on a characteristic of the drying process performed through the drying oven 10.

The drying oven 10 may include circulation fans 12:12-1 to 12-6, heating portions 13:13-1 to 13-6, an air supply fan 14, an air exhaust fan 15, and transfer portions 16:16-1 to 16-6. The circulation fan 12 may be a device that supplies a hot air into the plurality of sections 11 of the drying oven 10, and may be installed in each of the plurality of sections 11 of the drying oven 10. A temperature and a speed of the hot air generated by the circulation fan 12 may be set differently for each of the plurality of sections 11 within the drying oven 10.

The heating portion 13 may be a device that heats a hot air supplied into the plurality of sections 11 of the drying oven 10, and may be installed in each of the plurality of sections 11 of the drying oven 10. In this case, a temperature of the hot air heated through the heating portion 13 may be set differently for each of the plurality of sections 11 within the drying oven 10. According to an embodiment, the heating portion 13 may be a device that heats an air inside a plurality of sections 11 of the drying oven 10. In this case, a temperature of the air inside the drying oven 10 heated through the heating portion 13 may be set differently for each of the plurality of sections 11 of the drying oven 10.

The air supply fan 14 may supply an external air into the drying oven 10. The air exhaust fan 15 may discharge an air generated inside the drying oven 10 to the outside. That is, the external air supplied into the drying oven 10 through the air supply fan 14 may pass through the plurality of sections 11 within the drying oven 10, and may be discharged to the outside through an air exhaust port. An arrow shown in FIG. 1 may indicate a flow of an air inside and outside the drying oven 10.

The transfer portion 16 may be a device for moving the electrode within the drying oven 10, and may move within the plurality of sections 11 within the drying oven 10. Although FIG. 1 illustrates the transfer portion having a configuration separated for each of the plurality of sections 11 within the drying oven 10, a shape of the transfer portion 16 is not limited thereto, and the shape of the transfer portion 16 may be variously designed according to a shape of the drying oven 10. For example, the transfer portion 16 may be designed to penetrate the plurality of sections 11 within the drying oven 10.

The drying process data may include data obtained for each drying process performed in the drying oven 10. For example, the drying process data may include a date on which the drying process is performed, a moisture content and a temperature of an electrode surface measured for each of the plurality of sections 11 within the drying oven 10, or the like.

The condition of the drying oven may refer to a state condition of the drying oven 10 set to perform the drying process, and may be set differently for each drying process. The condition of the drying oven may include a speed and a temperature of a hot air supplied into the drying oven 10 through the circulation fan 12, and a temperature of the heating portion 13.

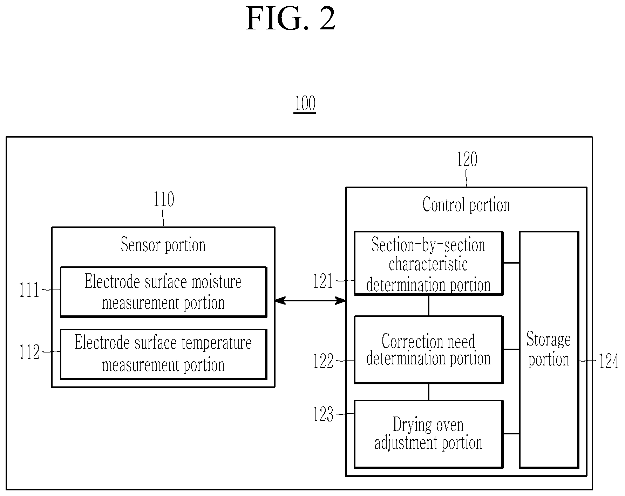

FIG. 2 is a block diagram of the electrode drying process monitoring system according to an embodiment of the present disclosure.

Referring to FIG. 2, the electrode drying process monitoring system according to the embodiment of the present disclosure may include a sensor portion 110: 110-1 to 110-6 and a control portion 120.

The sensor portion 110 may be installed in each of the plurality of sections 11 within the drying oven 10. The sensor portion 110 may determine a moisture measurement value and a temperature measurement value by measuring each of the moisture content and the temperature of the electrode surface for each of the plurality of sections 11 within the drying oven 10 whenever the drying process is performed. The sensor portion 110 may transmit the moisture measurement value and the temperature measurement value to the control portion 120. According to an embodiment, the sensor portion 110 may include an electrode surface moisture measurement portion 111 and an electrode surface temperature measurement portion 112.

The electrode surface moisture measurement portion 111 may measure the moisture content of the electrode surface in each of the plurality of sections 11 included in the drying oven 10. According to an embodiment, the electrode surface moisture measurement portion 111 may be an infrared moisture measurement device.

The electrode surface moisture measurement portion 111 may determine the moisture measurement value by calculating an average value of the moisture content of the electrode surface for each of the plurality of sections 11 of the drying oven 10 in real time. For example, the electrode surface moisture measurement portion 111 may measure the moisture content of the electrode surface for each of the plurality of sections 11 in real time while the drying process is being performed, and may calculate the average value of the moisture content measured in real time to determine the moisture measurement value.

The electrode surface moisture measurement portion 111 may determine the moisture measurement value by measuring the moisture content of the electrode surface at a specific point in each of the plurality of sections 11 of the drying oven 10. The specific point may be a point at which the section starts or a point at which the section ends. For example, the electrode surface moisture measurement portion 111 may measure the moisture content of the electrode surface at the start point of each of the plurality of sections 11, and may determine the measured moisture content as the moisture measurement value for the section.

The electrode surface temperature measurement portion 112 may determine the temperature measurement value for the electrode surface in each of the plurality of sections 11 included in the drying oven 10. According to an embodiment, the electrode surface temperature measurement portion 112 may be an infrared temperature measurement device.

The electrode surface temperature measurement portion 112 may measure the temperature of the electrode surface for each of the plurality of sections 11 of the drying oven 10 in real time, and may determine an average value of the measured temperatures as the temperature measurement value. For example, the electrode surface temperature measurement portion 112 may measure the temperature of the electrode surface for each of the plurality of sections 11 in real time while the drying process is being performed, and may designate an average of the electrode surface temperatures measured in real time as the temperature measurement value.

The electrode surface temperature measurement portion 112 may measure the temperature of the electrode surface at a specific point in each of the plurality of sections 11 of the drying oven 10, and may determine the measured temperature as the temperature measurement value. The specific point may be a point at which the section starts or a point at which the section ends. For example, the electrode surface temperature measurement portion 112 may determine the temperature of the electrode surface measured at the end point of each of the plurality of sections 11 as the temperature measurement value for the section.

The control portion 120 may be configured to control progress of the drying process performed in the drying oven 10, and may receive the moisture measurement value and the temperature measurement value from the sensor portion 110. The control portion 120 may determine the number of quality influence sections corresponding to sections that affect a quality of an electrode among the plurality of sections 11 within the drying oven 10 based on the moisture measurement value and the temperature measurement value. The control portion 120 may determine whether correction is necessary for the drying oven condition of the drying oven 10 that performs the drying process based on the number of the quality influence sections and the moisture measurement value. Depending on the determination result, the control portion 120 may adjust or maintain the drying oven condition of the drying oven 10.

According to an embodiment, the control portion 120 may include a section-by-section characteristic determination portion 121, a correction need determination portion 122, a drying oven adjustment portion 123, and a storage portion 124.

The section-by-section characteristic determination portion 121 may determine whether each section corresponds to one of the quality influence section, a drying completion section, and a general section based on one of the moisture measurement value and the temperature measurement value of each of the plurality of sections 11 within the drying oven 10 whenever the drying process is performed.

The quality influence section may refer to a section that affects the quality of the electrode generated through the drying process. For example, the quality influence section may be a section in which capillary migration of a binder occurs among the plurality of sections 11 of the drying oven 10 performing the drying process. The condition of the drying oven 10 may be set differently for each drying process. Accordingly, the number of sections corresponding to the quality influence sections among the plurality of sections 11 of the drying oven 10 may be different for each drying process. This is because the moisture measurement value and the temperature measurement value for each section may vary depending on conditions of the drying oven 10 performing the drying process (a temperature and a speed of the hot air, a temperature of the heating portion 13, and the like). The number of the sections corresponding to the quality influence sections among the plurality of sections 11 of the drying oven 10 may be proportional to the quality of the electrode generated through the drying process.

The drying completion section may refer to a section in which the drying process for the electrode is completed. A section corresponding to the drying completion section among the plurality of sections 11 of the drying oven 10 may be different for each drying process. For example, if it is assumed that temperature conditions of the heating portions 13 are the same but a first drying process and a second drying process are performed with different hot air conditions in the drying oven 10 including six sections 11-1 to 11-6, the drying completion section in the first drying process where a temperature and a speed of the hot air are relatively high may be a third section 11-3, and the drying completion section in the second drying process where a temperature and a speed of the hot air are relatively low may be a fifth section 11-5.

The general section may refer to the remaining section among the plurality of sections 11 of the drying oven 10 that does not correspond to the quality influence section and the drying completion section.

The section-by-section characteristic determination portion 121 may determine whether the section is the quality influence section based on whether the moisture measurement value and the temperature measurement value for each section received from the sensor portion 110 correspond to a first reference range. In addition, the section-by-section characteristic determination portion 121 may determine whether the section is the quality influence section based on whether a change rate of the moisture measurement value for each section and a change rate of the temperature measurement value for each section received from the sensor portion 110 correspond to a section setting reference value. In this case, the first reference range and the section setting reference value may be different for each electrode generated through the drying process, and may be stored in the storage portion 124. The change rate of the moisture measurement value may be a value obtained by dividing a difference between a moisture content of the electrode surface measured at a start point of each section 11 of the drying oven 10 and a moisture content of the electrode surface measured at an end point of the section by the moisture content of the electrode surface measured at the start point of the section. The change rate of the temperature measurement value may be a value obtained by dividing a difference between a temperature of the electrode surface measured at the start point of each section 11 of the drying oven 10 and a temperature of the electrode surface measured at the end point of the section by the temperature of the electrode surface measured at the start point of the section. The section-by-section characteristic determination portion 121 may determine whether the section is the drying completion section based on whether the moisture measurement value and the temperature measurement value for each section received from the sensor portion 110 correspond to a second reference range. The second reference range of each of the moisture measurement value and the temperature measurement value may be a moisture content range expected value and a temperature range expected value for the electrode immediately after the drying process is completed, and may be recorded in the storage portion 124. Additionally, the second reference range may have a value greater than the first reference range.

Whenever the drying process is performed, the section-by-section characteristic determination portion 121 may specify the number of the quality influence sections among the plurality of sections 11 within the drying oven 10 to transmit the specified number to the correction need determination portion 122.

The correction need determination portion 122 may receive the number of the quality influence sections from the section-by-section characteristic determination portion 121. The correction need determination portion 122 may receive the moisture measurement value from the sensor portion 110. The correction need determination portion 122 may determine whether the drying oven condition needs to be corrected based on the number of the quality influence sections and the moisture measurement value. For example, the correction need determination portion 122 may determine that correction for the drying oven condition is not necessary if the number of the quality influence sections is greater than or equal to a reference number and the moisture measurement value is less than or equal to a correction determination reference value. The correction need determination portion 122 may determine that the correction for the drying oven condition is necessary if the number of the quality influence sections is less than the reference number or the moisture measurement value exceeds the correction determination reference value.

If it is determined that the correction for the drying oven condition is necessary, the correction need determination portion 122 may determine a type of the drying oven condition requiring the correction based on whether the number of times of correction of a speed of the hot air is greater than or equal to a reference number of times. In this case, the correction need determination portion 122 may receive the number of times of the correction of the speed of the hot air from the storage portion 124. For example, the correction need determination portion 122 may determine that the correction of the speed of the hot air supplied into the drying oven 10 is necessary if the number of times of the correction of the speed of the hot air is less than three times. Alternatively, the correction need determination portion 122 may determine that correction of an internal temperature of the drying oven 10 is necessary if the number of times of the correction of the speed of the hot air is three or more times.

If it is determined that the correction is necessary and it is determined that the correction of the speed of the hot air supplied into the drying oven 10 is necessary, the correction need determination portion 122 may transmit a hot air speed correction signal indicating that a speed of the hot air inside the drying oven 10 needs to be adjusted to the drying oven adjustment portion 123. If it is determined that the correction is necessary and it is determined that the correction of the internal temperature of the drying oven 10 is necessary, the correction need determination portion 122 may transmit a temperature correction signal indicating that a temperature control within the drying oven 10 is necessary to the drying oven adjustment portion 123. If it is determined that the correction is not necessary, the correction need determination portion 122 may transmit a condition maintenance signal indicating that the drying oven condition needs to be maintained to the drying oven adjustment portion 123.

The hot air speed correction signal, the temperature correction signal, and the condition maintenance signal may include a result of determination on whether the correction is necessary and the type of the drying oven condition requiring the correction performed by the correction need determination portion 122. For example, the hot air speed correction signal may include a result of determining that the number of the quality influence sections is less than the reference number so that the correction for the drying oven condition is necessary. As another example, the temperature correction signal may include a result of determining that the moisture measurement value of any of the plurality of sections exceeds the correction determination reference value so that the correction for the drying oven condition is necessary. As another example, the condition maintenance signal may include a result of determining that the correction for the drying oven condition is not necessary because the number of the quality influence sections is greater than or equal to the reference number and all moisture measurement values for the plurality of sections are less than or equal to the correction determination reference value.

If the drying oven adjustment portion 123 receives the hot air speed correction signal from the correction need determination portion 122, the drying oven adjustment portion 123 may transmit a control signal for correcting the speed of the hot air supplied into the drying oven 10 to the circulation fan 12. For example, if the drying oven adjustment portion 123 receives the hot air speed correction signal, the drying oven adjustment portion 123 may transmit a signal that controls a speed of the circulation fan 12 to be increased to the circulation fan 12.

In an embodiment, if the moisture measurement value of a specific section among the plurality of sections 11 of the drying oven 10 exceeds the correction determination reference value, the drying oven adjustment portion 123 may correct the speed of the circulation fan 12 installed in a section immediately preceding the section. In an embodiment, if the number of sections corresponding to the quality influence sections among the plurality of sections 11 of the drying oven 10 is less than the reference number, the drying oven adjustment portion 123 may correct the speed of the circulation fan 12 installed in a section before and after the quality influence section.

According to an embodiment, the drying oven adjustment portion 123 may transmit the control signal for correcting the speed of the hot air supplied into the drying oven 10 to the circulation fan 12, and simultaneously it may count the number of times of the correction of the speed of the hot air stored in the storage portion 124. For example, if the number of times of the correction of the speed of the hot air stored in the storage portion 124 is two times, the drying oven adjustment portion 123 may transmit the control signal for correcting the speed of the hot air to the circulation fan 12, and simultaneously it may increase the number of times of the correction of the speed of the hot air by one time to three times.

If the drying oven adjustment portion 123 receives the temperature correction signal from the correction need determination portion 122, it may transmit a control signal for correcting a temperature of the hot air supplied into the drying oven 10 to the circulation fan 12, or may transmit a control signal for correcting a temperature of the heating portion 13 installed in the drying oven 10 to the heating portion 13. For example, if the drying oven adjustment portion 123 receives the temperature correction signal, it may transmit a signal that controls a temperature of a hot air emitted from the circulation fan 12 to be increased to the circulation fan 12. Alternatively, the drying oven adjustment portion 123 may transmit a signal that controls the temperature of the heating portion 13 to be increased to the heating portion 13.

According to an embodiment, if the moisture measurement value of a specific section among the plurality of sections 11 of the drying oven 10 exceeds the correction determination reference value, the drying oven adjustment portion 123 may transmit the control signal for correcting a temperature of the hot air to the circulation fan 12 installed in a section immediately preceding the section, or may transmit a control signal for correcting a temperature of the heating portion 13 installed in the section immediately preceding the section.

According to an embodiment, if the number of sections corresponding to the quality influence sections among the plurality of sections 11 of the drying oven 10 is less than the reference number, the drying oven adjustment portion 123 may transmit the control signal for correcting a temperature of the hot air to the circulation fan 12 installed in a section before and after the quality influence section, or may transmit a control signal for correcting a temperature of the heating portion 13 installed in the section before and after the quality influence section.

If the drying oven adjustment portion 123 receives the condition maintenance signal from the correction need determination portion 122, it may transmit a control signal for maintaining the drying oven condition to the circulation fan 12 and the heating portion 13.

The storage portion 124 may store the section setting reference value, the first reference range, the second reference range, the reference number, the reference number of times, the number of times of the correction of the speed of the hot air, and the like.

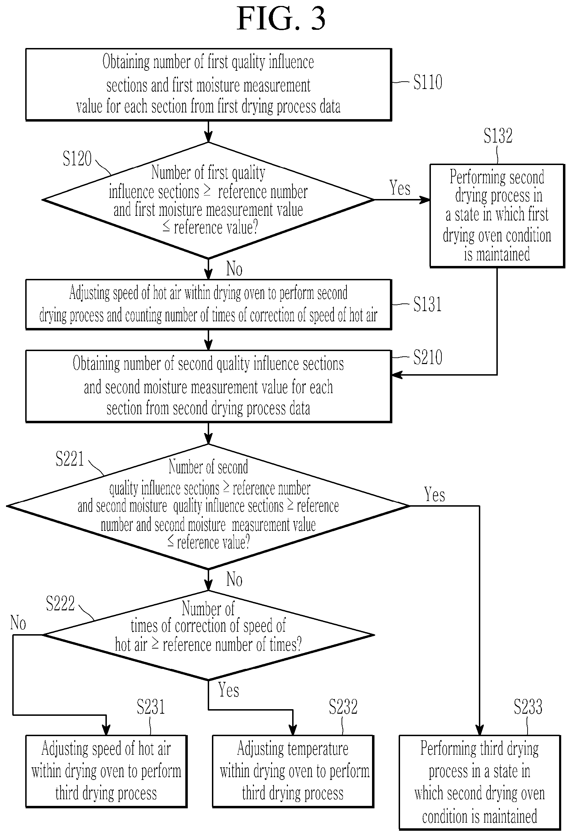

FIG. 3 is a flowchart of an electrode drying process monitoring method according to an embodiment of the present disclosure.

Referring to FIG. 3, the method for monitoring the electrode drying process according to the embodiment of the present disclosure may include a first drying process correction step including a first drying process data acquisition step S110, a step S120 of determining whether the correction is necessary, and a step S131 including correction of hot air speed or a step S132 including maintenance of first drying oven condition.

In the first drying process data acquisition step S110, the control portion 120 may obtain first drying process data from the sensor portion 110. The first drying process data may refer to data obtained from the drying oven 10 that performs the first drying process, and may include a first moisture measurement value and a first temperature measurement value for each of the plurality of sections 11 within the drying oven 10. The control portion 120 may specify the number of first quality influence sections that affect the quality of the electrode among the plurality of sections 11 within the drying oven 10 based on the first moisture measurement value and the first temperature measurement value. The number of the first quality influence sections may refer to the number of sections that affect the quality of the electrode among the plurality of sections 11 within the drying oven 10 that performs the first drying process.

In the step S120 of determining whether the correction is necessary, the control portion 120 may determine whether the correction of a first drying oven condition for a state of the drying oven that performs the first drying process is necessary based on the number of the first quality influence sections and the first moisture measurement value. For example, in the step S120 of determining whether the correction is necessary, the control portion 120 may determine that the correction for the first drying oven condition is not necessary if the number of the first quality influence sections is greater than or equal to the reference number and the first moisture measurement value is less than or equal to the correction determination reference value.

In the hot air speed correction S131 or first drying oven condition maintenance step S132, if it is determined that the correction for the first drying oven condition is necessary, the control portion 120 may perform a second drying process by adjusting the speed of the hot air inside the drying oven 10, and if it is determined that the correction for the first drying oven condition is not necessary, the control portion 120 may perform the second drying process in a state in which the first drying oven condition is maintained.

According to an embodiment, the hot air speed correction step S131 may include a step of transmitting the control signal for correcting the speed of the hot air supplied into the drying oven to the circulation fan 12 and counting the number of times of the correction of the speed of the hot air by the control portion 120 if it is determined that the correction for the first drying oven condition is necessary, or the first drying oven condition maintenance step S132 may include a step of transmitting a control signal for maintaining the first drying oven condition to the circulation fan 12 and the heating portion 13 by the control portion 120 if it is determined that the correction for the first drying oven condition is not necessary.

According to an embodiment, the hot air speed correction step S131 S131 may include a step of correcting the speed of the circulation fan 12 installed in a section immediately preceding a specific section among the plurality of sections 11 of the drying oven 10 if the first moisture measurement value of the section exceeds the correction determination reference value, or a step of correcting the speed of the circulation fan 12 installed in a section before and after the first quality influence section if the number of sections corresponding to the first quality influence sections among the plurality of sections 11 of the drying oven 10 is less than the reference number.

The electrode drying process monitoring method according to another embodiment of the present disclosure may further include a second drying process correction step in addition to the first drying process correction step. The second drying process correction step may include a second drying process data acquisition step S210, a step of determining whether the correction is necessary, and a step including correction of a hot air speed, temperature correction within the drying oven, or maintenance of a second drying oven condition.

In the second drying process data acquisition step S210, the control portion 120 may obtain second drying process data from the sensor portion 110. The second drying process data may refer to data obtained from the drying oven 10 that performs the second drying process, and may include a second moisture measurement value and a second temperature measurement value for each of the plurality of sections 11 within the drying oven 10. The control portion 120 may specify the number of second quality influence sections that affect the quality of the electrode among the plurality of sections 11 within the drying oven 10 based on the second moisture measurement value and the second temperature measurement value. The number of the second quality influence sections may refer to the number of sections that affect the quality of the electrode among the plurality of sections 11 within the drying oven 10 that performs the second drying process.

In the step of determining whether the correction is necessary, the control portion 120 may determine whether the correction for the second drying oven condition is necessary based on the number of the second quality influence sections and the second moisture measurement value, and may determine a type of the second drying oven condition requiring the correction based on the number of times of correction of a speed of the hot air received from the storage portion 124.

According to an embodiment, the step of determining whether the correction is necessary may include a step S221 in which the control portion 120 determines whether the correction for the second drying oven condition is necessary based on the number of the second quality influence sections and the second moisture measurement value, and a step S222 in which the type of the second drying oven condition requiring the correction is determined based on whether the number of times of correction of the speed of the hot air is greater than or equal to a reference number of times if the correction for the second drying oven condition is determined to be necessary. For example, the control portion 120 may determine that correction of an internal temperature of the drying oven 10 is necessary if the number of times of the correction of the speed of the hot air is three or more times, and may determine that the correction of the speed of the hot air supplied into the drying oven 10 is necessary if the number of times of the correction of the speed of the hot air is less than the three times.

In the step including the correction of the hot air speed, the temperature correction within the drying oven, or maintenance of the second drying oven condition, if it is determined that the correction for the second drying oven condition is necessary and it is determined that the correction for the speed of the hot air supplied into the drying oven 10 among the second drying oven condition is necessary, the control portion 120 may perform a third drying process by adjusting the speed of the hot air supplied into the drying oven 10, if it is determined that the correction for the second drying oven condition is necessary and it is determined that the correction of the internal temperature of the drying oven 10 among the second drying oven condition is necessary, the control portion 120 may perform the third drying process by adjusting the temperature of the hot air supplied into the drying oven 10 or a temperature of the heating portion installed in the drying oven 10, and if it is determined that the correction for the second drying oven condition is not necessary, the control portion 120 may perform the third drying process in a state in which the second drying oven condition is maintained.

According to an embodiment, the step including the correction of the hot air speed, the temperature correction within the drying oven, or maintenance of the second drying oven condition may include a step S231 of transmitting the control signal for correcting the speed of the hot air supplied into the drying oven to the circulation fan 12 by the control portion 120 if it is determined that the correction for the second drying oven condition is necessary and it is determined that the correction for the speed of the hot air supplied into the drying oven 10 is necessary, a step S232 of transmitting the control signal for correcting the temperature of the hot air supplied into the drying oven 10 to the circulation fan 12 or transmitting the control signal for correcting the temperature of the heating portion 13 installed in the drying oven 10 to the heating portion 13 by the control portion 120 if it is determined that the correction for the second drying oven condition is necessary and it is determined that the correction of the internal temperature of the drying oven 10 is necessary, and a step S233 of transmitting a control signal for maintaining the second drying oven condition to the circulation fan 12 and the heating portion 13 by the control portion 120 if it is determined that the correction for the second drying oven condition is not necessary.

The first drying process correction step and the second drying process correction step described above may be repeatedly applied to the third drying process and drying processes after the third drying process.

The above-described method may be written as a program that may be executed on a computer, and may be implemented in a general purpose digital computer that operates the program using a computer-readable recording medium. The computer-readable recording medium may include a storage medium such as such as a ROM, a RAM, a USB, a magnetic storage medium (e.g., a floppy disk or a hard disk), or an optical readable medium (e.g., a CD-ROM or a DVD).

A scope of the present disclosure should be indicated by the claims described below rather than the above detailed description, and all changes or modifications derived from a meaning and a scope of the claims and an equivalent concept thereof should be interpreted as being included in the scope of the present disclosure.

## Claims

1. A monitoring system for a plurality of sections within a drying oven performing a drying process for an electrode, comprising:
a sensor portion configured to measure a moisture content and a temperature of a surface of the electrode in each of the plurality of sections whenever the drying process for the electrode is performed to determine a moisture measurement value and a temperature measurement value; and
a control portion configured to
determine the number of quality influence sections that affect a quality of the electrode based on the moisture measurement value and the temperature measurement value of each of the plurality of sections,
determine whether correction of a condition of the drying oven for a state of the drying oven is necessary based on whether the moisture measurement value is less than or equal to a correction determination reference value and the number of the quality influence sections is greater than or equal to a reference number, and
control progress of a next drying process by adjusting the condition of the drying oven according to a result of determining whether correction for the condition of the drying oven is necessary.

2. The monitoring system of claim 1, wherein the sensor portion comprises:
an electrode surface moisture measurement portion configured to calculate an average value of the moisture content of the surface of the electrode for each of the plurality of sections in real time to determine the moisture measurement value; and
an electrode surface temperature measurement portion configured to measure the temperature of the surface of the electrode for each of the plurality of sections in real time and determines an average value of the measured temperatures as the temperature measurement value.

3. The monitoring system of claim 1, wherein the sensor portion comprises:
an electrode surface moisture measurement portion configured to measure the moisture content of the surface of the electrode at a specific point in each of the plurality of sections to determine the moisture measurement value; and
an electrode surface temperature measurement portion configured to measure the temperature of the surface of the electrode at a specific point in each of the plurality of sections to determine the temperature measurement value.

4. The monitoring system of claim 1, wherein the control portion comprises a section-by-section characteristic determination portion configured to determine whether each of the plurality of sections corresponds to one of the quality influence section, a drying completion section, and a general section based on the moisture measurement value and the temperature measurement value of each of the plurality of sections within the drying oven whenever the drying process is performed.

5. The monitoring system of claim 4, wherein the section-by-section characteristic determination portion is configured to:
determine whether the section corresponds to the quality influence section based on whether the moisture measurement value and the temperature measurement value for each of the plurality of sections correspond to a first reference range, and
determine whether the section corresponds to the drying completion section based on whether the moisture measurement value and the temperature measurement value for each of the plurality of sections correspond to a second reference range greater than the first reference range.

6. The monitoring system of claim 4, wherein the section-by-section characteristic determination portion is configured to determine whether the section corresponds to the quality influence section based on whether a change rate of the moisture measurement value for each of the plurality of sections and a change rate of the temperature measurement value for each of the plurality of sections correspond to a section setting reference value.

7. The monitoring system of claim 1, wherein the control portion comprises a correction need determination portion configured to:
determine that the correction for the condition of the drying oven is not necessary if the moisture measurement value is less than or equal to the correction determination reference value and the number of the quality influence sections is greater than or equal to the reference number, or
determine that the correction for the condition of the drying oven is necessary if the moisture measurement value exceeds the correction determination reference value or the number of the quality influence sections is less than the reference number.

8. The monitoring system of claim 7, wherein when the correction need determination portion determines that the correction for the condition of the drying oven is necessary, the correction need determination portion is configured to:
determine that correction of an internal temperature of the drying oven is necessary if the number of times of correction of a speed of a hot air received from a storage portion is greater than or equal to a reference number of times; or
determine that correction of a speed of a hot air supplied into the drying oven is necessary if the number of times of correction of the speed of the hot air is less than the reference number of times.

9. The monitoring system of claim 1, wherein the control portion includes a drying oven adjustment portion, and
the drying oven adjustment portion is configured to:
transmit a control signal for correcting a speed of a hot air supplied into the drying oven to a circulation fan installed at the drying oven if a result of determining that the correction for the condition of the drying oven is necessary is received; or
transmit a control signal for maintaining the condition of the drying oven to the circulation fan and a heating portion installed at the drying oven if a result of determining that the correction for the condition of the drying oven is not necessary is received.

10. The monitoring system of claim 9, wherein the drying oven adjustment portion is configured to transmit the control signal for correcting the speed of the hot air to the circulation fan and simultaneously the drying oven adjustment portion counts the number of times of correction of a speed of a hot air stored in a storage portion.

11. The monitoring system of claim 9, wherein the drying oven adjustment portion is configured to:
transmit the control signal for correcting the speed of the hot air to the circulation fan if a result of determining that correction of a speed of a hot air supplied into the drying oven is necessary is received, and
transmit a control signal for correcting a temperature of the hot air or a control signal for correcting a temperature of the heating portion to the circulation fan or the heating portion if a result of determining that correction of an internal temperature of the drying oven is necessary is received.

12. The monitoring system of claim 9, wherein when the result of determining that the correction for the condition of the drying oven is necessary is received, the drying oven adjustment portion is configured to transmit the control signal for correcting the speed of the hot air to the circulation fan installed in a section immediately preceding a specific section among the plurality of sections of the drying oven if the moisture measurement value of the specific section exceeds the correction determination reference value.

13. The monitoring system of claim 9, wherein when the result of determining that the correction for the condition of the drying oven is necessary is received, the drying oven adjustment portion is configured to transmit the control signal for correcting the speed of the hot air to the circulation fan installed in a section before and after the quality influence section if the number of sections corresponding to the quality influence sections among the plurality of sections of the drying oven is less than the reference number.

14. The monitoring system of claim 11, wherein when the result of determining that the correction for the condition of the drying oven is necessary is received, the drying oven adjustment portion is configured to:
transmit the control signal for correcting the temperature of the hot air to the circulation fan installed in a section immediately preceding a specific section among the plurality of sections of the drying oven; or
transmit the control signal for correcting the temperature of the heating portion installed in the section immediately preceding the specific section if the moisture measurement value of the specific section exceeds the correction determination reference value.

15. The monitoring system of claim 11, wherein when the result of determining that the correction for the condition of the drying oven is necessary is received, the drying oven adjustment portion is configured to transmit the control signal for correcting the temperature of the hot air to the circulation fan installed in a section before and after the quality influence section or transmits the control signal for correcting the temperature of the heating portion installed in the section before and after the quality influence section if the number of sections corresponding to the quality influence sections among the plurality of sections of the drying oven is less than the reference number.

16. An electrode drying process monitoring method, comprising:
obtaining, by a control portion, first drying process data including a first moisture measurement value and a first temperature measurement value for each of a plurality of sections within a drying oven performing a first drying process from a sensor portion and specifying, by the control portion, the number of first quality influence sections that affect a quality of an electrode among the plurality of sections based on the first moisture measurement value and the first temperature measurement value;
determining, by the control portion, whether correction of a first drying oven condition for a state of the drying oven performing the first drying process is necessary based on the number of the first quality influence sections and the first moisture measurement value; and
performing, by the control portion, a second drying process by adjusting a speed of a hot air inside the drying oven if it is determined that the correction for the first drying oven condition is necessary and performing, by the control portion, the second drying process in a state in which the first drying oven condition is maintained if it is determined that the correction for the first drying oven condition is not necessary.

17. The electrode drying process monitoring method of claim 16, wherein the determining of whether the correction of the first drying oven condition is necessary includes determining whether the correction of the first drying oven condition is necessary if the number of the first quality influence sections is less than a reference number and the first moisture measurement value exceeds a correction determination reference value.

18. The electrode drying process monitoring method of claim 16, wherein the performing of the second drying process comprises:
transmitting a control signal for correcting the speed of the hot air supplied into the drying oven to a circulation fan installed at the drying oven and counting the number of times of correction of the speed of the hot air if it is determined that the correction for the first drying oven condition is necessary; or
transmitting a control signal for maintaining the first drying oven condition to the circulation fan and a heating portion if it is determined that the correction for the first drying oven condition is not necessary.

19. The electrode drying process monitoring method of claim 18, wherein the counting of the number of times of correction of the speed of the hot air comprises:
correcting a speed of the circulation fan installed in a section immediately preceding a specific section among the plurality of sections of the drying oven if the moisture measurement value of the specific section exceeds a correction determination reference value; and
correcting a speed of the circulation fan installed in a section before and after the first quality influence section if the number of sections corresponding to the first quality influence sections among the plurality of sections of the drying oven is less than a reference number.

20. The electrode drying process monitoring method of claim 16, further comprising:
obtaining, by the control portion, second drying process data including a second moisture measurement value and a second temperature measurement value for each of the plurality of sections within the drying oven performing the second drying process from the sensor portion and specifying, by the control portion, the number of second quality influence sections among the plurality of sections based on the second moisture measurement value and the second temperature measurement value;
determining, by the control portion, whether correction of a second drying oven condition for a state of the drying oven performing the second drying process is necessary based on the number of the second quality influence sections and the second moisture measurement value and determining, by the control portion, a type of the second drying oven condition requiring the correction based on the number of times of correction of a speed of a hot air received from a storage portion; and
performing, by the control portion, a third drying process by adjusting the speed of the hot air supplied into the drying oven if it is determined that the correction for the second drying oven condition is necessary and it is determined that the correction of the speed of the hot air supplied into the drying oven among the second drying oven condition is necessary, performing, by the control portion, the third drying process by adjusting a temperature of the hot air supplied into the drying oven or a temperature of a heating portion installed in the drying oven if it is determined that the correction for the second drying oven condition is necessary and it is determined that correction of an internal temperature of the drying oven among the second drying oven condition is necessary, and performing, by the control portion, the third drying process in a state in which the second drying oven condition is maintained if it is determined that the correction for the second drying oven condition is not necessary.

21. The electrode drying process monitoring method of claim 20, wherein the determining of the type of the second drying oven condition comprises:
determining that the correction for the second drying oven condition is necessary if the number of the second quality influence sections is less than a reference number and the second moisture measurement value exceeds a correction determination reference value; and
determining the type of the second drying oven condition requiring the correction based on whether the number of times of correction of the speed of the hot air is greater than or equal to a reference number of times if it is determined that the correction for the second drying oven condition is necessary.

22. The electrode drying process monitoring method of claim 21, wherein the determining of the type of the second drying oven condition comprises:
determining that the correction of the internal temperature of the drying oven is necessary if the number of times of correction of the speed of the hot air is greater than or equal to the reference number of times; or
determining that correction of a speed of a hot air supplied into the drying oven is necessary if the number of times of correction of the speed of the hot air is less than the reference number of times.

23. The electrode drying process monitoring method of claim 20, wherein the performing of the third drying process comprises:
transmitting a control signal for correcting the speed of the hot air supplied into the drying oven to a circulation fan installed in the drying oven if it is determined that the correction for the second drying oven condition is necessary and it is determined that the correction for the speed of the hot air supplied into the drying oven is necessary;
transmitting a control signal for correcting the temperature of the hot air supplied into the drying oven to the circulation fan or transmitting a control signal for correcting the temperature of the heating portion installed in the drying oven to the heating portion if it is determined that the correction for the second drying oven condition is necessary and it is determined that the correction of the internal temperature of the drying oven is necessary; or
transmitting a control signal for maintaining the second drying oven condition to the circulation fan and the heating portion if it is determined that the correction for the second drying oven condition is not necessary.
